Europäisches Patentamt

European Patent Office

Office européen des brevets

(11) Veröffentlichungsnummer: **0 257 248**
**A2**

(12) **EUROPÄISCHE PATENTANMELDUNG**

(21) Anmeldenummer: **87109609.5**

(22) Anmeldetag: **03.07.87**

(51) Int. Cl.⁴: **G01N 21/53 , H01J 61/80**

(30) Priorität: **19.08.86 DE 3628072**

(43) Veröffentlichungstag der Anmeldung:
**02.03.88 Patentblatt 88/09**

(84) Benannte Vertragsstaaten:
**AT CH DE ES FR GB IT LI NL SE**

(71) Anmelder: **Impulsphysik GmbH**
**Achter de Weiden 10**
**D-2000 Hamburg-Schenefeld 1(DE)**

(72) Erfinder: **Früngel, Frank, Dr.-Ing.**
**Herwigredder 105**
**D-2000 Hamburg 56(DE)**

(74) Vertreter: **Klunker . Schmitt-Nilson . Hirsch**
**Winzererstrasse 106**
**D-8000 München 40(DE)**

(54) **Streulichtmessgerät.**

(57) Ein Streulichtmeßgerät für die in situ-Messung in einem flüssigen oder gasförmigen Medium zur Messung von Trübstoffgehalten oder Stäuben besitzt eine Lichtquelle, einen außerhalb des Strahlengangs der Lichtquelle angeordneten Lichtempfänger und ein Wood'sches Horn, das den von der Lichtquelle abgegebenen Lichtstrahl schluckt.

Bei der Lichtquelle handelt es sich um eine Xenon-Funkenstrecke, die Lichtimpulse mit einer Dauer von 0,5 bis 5 Mikrosekunden und einer Impulsenergie von 0,05 bis 0,5 Ws im blau-weißen Spektrum erzeugt. Der Lichtempfänger ist mit dem Impulsgenerator der Lichtquelle synchronisiert, so daß ein Nutzsignal nur in dem Zeitraum gewonnen wird, in welchem die Lichtquelle einen Lichtimpuls aussendet. Eine Weitwinkeloptik erfaßt praktisch den gesamten Meßraum. Der Lichtempfänger besitzt außerdem eine Filterschaltung mit einer Bandbreite von 50 bis 1000 kHz. Mit dem Streulichtmeßgerät lassen sich extrem geringe Staubintensitäten nachweisen.

FIG. 1

## Die Erfindung betrifft ein Streulichtmeßgerät.

Solche Streulichtmeßgeräte werden eingesetzt, um Trübstoffgehalte, Aerosole oder Stäube zu messen. Beispielsweise werden solche Streulichtmeßgeräte in Abgaskaminen eingesetzt, um den Schadstoffgehalt der Abgase zu messen.

Unter Feinstäuben versteht man im allgemeinen solche Stäube, die lungengängig sind, d.h., die in den Alveolen der Lungen hängenbleiben. Diese können toxisch oder auch rein mechanisch reizend sein, wie es z.B. bei Quarzstaub der Fall ist. Die Grenze zu Aerosolen ist fließend, teilweise überlappend.

In vielen Ländern wurden in letzter Zeit verschärfte Schadstoff-Bestimmungen erlassen, durch die die Obergrenzen von Schadstoffen in Abgasen festgelegt wird. In der Bundesrepublik Deutschland beispielsweise wird durch die "technische Anleitung Luft" der Staubanteil von durch Kamine abgeführte Abgase teilweise auf 1mg/m$^3$ oder noch niedriger festgesetzt. Um die einschlägigen Bestimmungen einhalten und die Einhaltung der Bestimmungen überfrüfen zu können, ist es notwendig, Meßgeräte zur Verfügung zu haben, die sehr geringe Mengen von beispielsweise Stäuben in einem Abgaskamin mit einer gegebenen Genauigkeit messen können.

Die bislang üblichen transmissometrischen Meßverfahren sind bei den jetzt geforderten extrem niedrigen Werten nicht mehr einsetzbar, da die Transmissionsminderung unter 0,1 Promille liegt. Deshalb kommen grundsätzlich nur Streulichtmessungen in Frage.

Die bislang bekannten Streulichtmeßgeräte arbeiten in erster Linie nach dem sogenannten in-vitro-Prinzip. Danach wird z.B. einem Abgaskamin eine Probe des Abgasstaubes entnommen und durch eine Meßzelle hindurchgeführt, die mit hoher Empfindlichkeit die Bestimmung und die Vermessung der Staubmenge zuläßt. Allerdings sind die Strömungsverhältnisse in einem Abluftkamin im allgemeinen inhomogen, d.h., die Strömung an den Wandungen ist langsamer als in der Mitte.

Voraussetzung für ein aussagekräftiges Meßergebnis ist die sogenannte isokinetische Probenentnahme. Das bedeutet: die beispielsweise dem Kamin-Abgas entnommene Probe muß repräsentativ sein für das zu messende Medium. Die in der Probe gemessene Staubmenge muß -bei möglichen geringen Abweichungen-der Staubmenge in dem Abluftkamin entsprechen. Aufgrund turbulenter Strömungen in dem Kamin und durch Verschmutzungen des Probenröhrchens nach gewisser Betriebsdauer ist es jedoch schwierig, der genannten Forderung zu entsprechen.

Ein vornehmliches Problem bei der Messung von Trübstoffgehalten, Aerosolen oder Stäuben mit Hilfe eines Streulichtmeßgeräts liegt darin, daß bei sehr feinen Partikeln deren Abmessungen weit unterhalb der Wellenlänge von beispielsweise Infrarotlicht liegt, wie es von üblichen Leuchtdioden oder Glühlampen emittiert wird.

Man hat deshalb daran gedacht, als Lichtquelle Xenon-Lampen zu verwenden (z.B. DE-OS 30 26 077). Üblicherweise beträgt die Entladungsdauer bei solchen Xenon-Lampen 1 ms. Es hat sich gezeigt, daß Xenon-Blitzlampen, die relativ lange Lichtimpulse einer Dauer von etwa 1 ms abgeben, eine ungenügende Lebensdauer aufweisen un daß entsprechende Speicherschaltungen erforderlich sind, welche die Anzeige verlangsamen. Dies ist insbesondere nachteilig, wenn der Staubanteil in dem zu messenden Medium sehr gering ist.

Anererseits braucht man auf der Seite des Lichtempfängers einen relative hohen Lichtimpuls, um ein auswertbares und assagekräftiges Meßsignal zu erhalten. Eine verkürzte Lichtimpulsdauer steht diesem Erfordernis zunächst entgegen.

Der Erfindung liegt die Aufgabe zugrunde, ein Streulichtmeßgerät zu schaffen, das in der Lage ist, zuverlässige Meßergebnisse auch dann zu liefern, wenn die Staubkonzentration nur beispielsweise etwa 20 μg/m$^3$ beträgt. Ein solches Streulichtmeßgerät soll zur in situ-Messung auch bei kleinen Kaminen einsetzbar sein, deren Durchmesser 40 cm und 2 m liegen kann.

Diese Aufgabe wird durch die im Anspruch 1 angegebene Erfindung gelöst.

Erfindungsgemäß beträgt die Lichtimpulsdauer nur 0,5 bis 5 Mikrosekunden. Um im Lichtempfänger ein auswertbares Signal erzeugen zu können, muß der Lichtimpuls eine bestimmte Energie aufweisen. Diese beträgt erfindungsgemäß zwischen 0,05 und 0,5 Ws. Damit wird genügend Lichtenergie empfangen, um ein aussagekräftiges Meßsignal zu erhalten.

Betrachtet man eine herkömmliche Xenon-Blitzlampe, so würde ein Verringerung der Lichtimpulsbreite auf 1 μs bedeuten, daß die elektrische Entladung im Kondensator-Entladungskreis der Xenon-Lampe so hochohmig wird, daß der Lichtblitz tatsächlich relativ lang wird. Wenn man nun davon ausgeht, daß man aus praktischen Erwägungen eine Impulsdauer von 1 μs verwendet, was einer Anstiegszeit von 1/4 μs auf die Spitzenamplitude des Lichtimpulses entspricht, so wird erfindungsgemäß der Lichtempfänger an diese Verhältnisse dadurch angepaßt, daß die Bandbreite des Filter-Verstärkers etwa 50 bis 1000 kHz beträgt.

Man kann die Lichtimpulsdauer auf 2 μs erhöhen, ohne daß der dadurch hervorgerufene Empfindlichkeitsverlust das Meßergebnis gravierend verschlechtert.

Ein weiteres Problem in Verbindung mit Xenon-Blitzlampen ist die Lebensdauer der Lampe. Da die Anordnung der Streulichtmeßgeräte beispielsweise in Kaminen ein häufiges Austauschen der Blitzlampe verbietet, muß man dafür Sorge tragen, daß die Xenon-Blitzlampe über lange Zeit hinweg konstante Lichtimpulse abgibt.

Erfindungsgemäß wird dies dadurch erreicht, daß die Xenon-Blitzlampe unterkritisch betrieben wird, d.h.: die Entladungsenergie und der damit verbundene akustische Schock des Funkens sind noch nicht stark genug ausgeprägt, um eine Zerstäubung des Elektrodenmaterials der Xonon-Blitzlampe hervorzurufen. Mit anderen Worten: der die Elektroden beaufschlagende akustische Schock befindet sich im Geltungsbereich des Hook'schen Gesetzes, so daß die Lebensdauer der Elektroden der Xenon-Blitzlampe theoretisch unendlich groß ist.

Abgesehen von dem Vorteil der beträchtlichen Lebensdauer der Xenon-Blitzlampe wird durch die Erfindung auch erreicht, daß die bislang üblichen Kompensations-Maßnahmen völlig entfallen können; denn da die Elektroden praktisch unversehrt bleiben, kann man über lange Zeit hinweg, beispielsweise über mehrere Jahre, mit einer konstanten Elektrodenspannung arbeiten.

Erfindungsgemäß eignen sich als Elektrodenmaterial insbesondere Legierungen aus Wolfram mit Zusätzen von Nickel, Barium oder Aluminium. Durch die erwähnten Zusätze wird die Helligkeitkonstanz der Blitzlampen sichergestellt.

Die der Lichtquelle zugeordnete Optik kann so ausgestaltet sein, daß ein im wesentlichen paralleles Lichtstrahlenbündel erzeugt wird. Dies erreicht man beispielsweise dadurch, daß die etwa 1 mm betragende Xenon-Funkenstrecke in den Brennpunkt eines anastigmatischen Linsensystems gelegt wird. Vorteilhafter ist es aber, das Abbild des Funkens als reelles Bild im Wood'schen Horn zu projizieren. Dadurch ist es möglich, die Abmessungen des Wood'schen Horns kleinzuhalten. Bei einem Anastigmaten mit 500 mm Brennweite würde man in einem Abstand von 50 cm eine 10-fache Vergrößerung des Funkenbildes erhalten.

Obschon die Erfindung speziell die Verwendung eines Wood'schen Horns vorsieht, ist es auch möglich, eine Tripel-Spiegel-Anordnung zu verwenden, die den von der Lichtquelle ausgesandten Lichtstrahl parallel in die Lichtquelle reflektiert. Man kann auch anstelle des Wood'schen Horns ein geschwärztes krummes Rohr verwenden. Je nach Anforderungen an die Meßgenauigkeit kann sich eine solche, naturgemäß kostengünstigere Lösung empfehlen. Beim Arbeiten in der freien Atmosphäre kann natürlich auf die Anordnung einer Lichtfalle zum Einfangen des Meßstrahls überhaupt verzichtet werden.

In der Regel ist eine in bestimmten Abständen oder ununterbrochene Kontrolle der Funktionstüchtigkeit des Maßgeräts notwending. Das Überprüfen der Eich-bzw. Standartwerte des Geräts geschieht erfindungsgemäß dadurch, daß zwischen Lichtquelle und Lichtempfänger ein mindestens an einer Stelle unterbrochener Glasfaserstrang verläuft, wobei an der Unterbrechungsstelle ein Graufilter oder ein elektromagnetisch fernbedienbarer Verschluß angeordnet ist. Bei eingeschobenem Graufilter wird ein vorgegebener Meßwert eingespielt. Dadurch kann man jederzeit die Funktionstüchtigkeit des Geräts quantitativ überprüfen. Während der Funktionskontrolle muß natürlich die Weitwinkeloptik des Lichtempfängers oder des Senders so abgedeckt werden, daß er lediglich das über den Glasfaserstrang geleitete Licht empfängt.Entsprechend wird der Glasfasertrang während der normalen Messungen durch eine Verschlußklappe unterbrochen. Bei Verwendung mehrerer Graufilter können entsprechend viele Eichpunkte genommen werden.

Zur Überprüfung der Betriebsbereitschaft des Geräts kann an einer oder mehreren Stellen ein justierbarer Streustift in die Meßkammer eingebracht werden, derart, daß beispielsweise eine eine bestimmte Rauhigkeit aufweisende Stirnfläche des Streustift an einer ganz bestimmten Stelle zu liegen kommt. Wird dann von der Lichtquelle ein Lichtimpuls abgegeben, so gelangt auf den Lichtempfänger ein bestimmter, vom Streustift reflektierter Lichtimpuls. Weicht das dem Lichtimpuls entsprechende Prüfsignal vom Sollwert nach untern ab, so bedeutet dies, daß die Optik der Lichtquelle und/oder des Lichtempfängers verschmutzt ist. Andererseits kann dieses auch bedeuten, daß die Empfindlichkeit der Photodiode oder die Leistungsfähigkeit der Xenon-Blitzlampe nachgelassen hat.

Insbesondere kann man die dem Lichtempfänger nachgeschaltete Verstärker-und Auswerteschaltung so justieren, daß ein Ruhestrom von ca. 4 mA fließt. Dadurch erhält man einen sogenannten lebenden Nullpunkt und eine entsprechende Anzeige bei Störungen in der Stromversorgung.

Um möglichst aussagekräftige Signale zu erhalten, verwendet man zweckmäßigerweise eine extrem rauscharme Photodiode im Lichtempfänger. Man kann auch eine Hochvakuum-Photozelle verwenden, bei denen bauartbedingt kein Eigenrauschen möglich ist. Ist sichergestellt, daß kein Tageslicht oder Kunstlicht die Messung stört, kann man auch einen Photovervielfacher einsetzen.

Im Lichtempfänger sorgt ein rauscharmer Verstärker in Verbindung mit einer Abtast-und Halteschaltung dafür, daß die jeweiligen Spitzenwerte der empfangenen Lichtimpulse zwischengespeichert und einer Mittelwerbildung unterzogen werden. Beispielsweise kann man als Meßsignal die Einzelsignale aus einer viertel Stunde mitteln.

Im Bereich der Signalauswertung wird zweckmäßigerweise eine Skala vorgesehen, die bei Abluftkaminen von z.B. 0,5 bis 30 mg/m$^3$ reicht, oder, bei Messungen in der freien Atmosphäre, von 20 bis 300 μg/m$^3$ .

Im folgenden werden Ausführungsbeispiele der Erfindung anhand der Zeichnung näher erläutert. Es zeigen:

Fig. 1. ein Blockschaltbild eines erfindungsgemäßen Streulichtmeßgeräts,

Fig. 2 eine modifizierte Ausführungsform des Geräts nach Fig. 1, und

Fig. 3 eine weitere modifizierte Ausführungsform des erfindungsgemäßen Streulichtmeßgeräts.

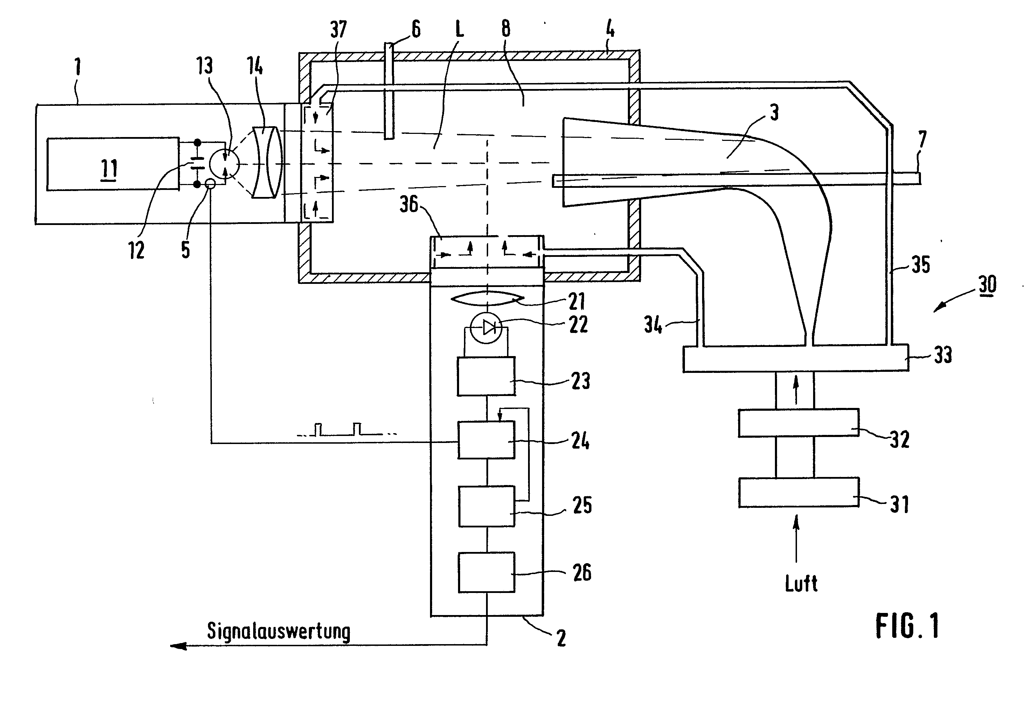

Das in Fig. 1 dargestellte Streulichtmeßgerät besitzt eine Lichtquelle 1, einen dazu etwa im rechten Winkel angeordneten Lichtempfänger 2, ein der Lichtquelle 1 gegenüberliegendes Wood'sches Rohr 3 und eine hier nicht näher dargestellte Signalauswertungs-Einrichtung.

Die Lichtquelle 1, der Lichtempfänger 2 und das Wood'sche Rohr sind an drei Seiten eines im Querschnitt rechteckigen Abgaskamins 4 angeordnet, so daß der Querschnitt des Kamins eine Meßkammer 8 bildet.

Die Lichtquelle 1 besitzt einen Impulsgenerator 11, einen daran angeschlossenen Entladungskondenstor 12 und eine dazu parallel geschaltete Xenon-Funkenstrecke 13, der als Optik ein hochwertiger Anastigmat 14 nachgeordnet ist.

Der Impulsgenerator 11 erzeugt in gewissen zeitlichen Abständen Lichtimpulse mit einer von 0,5 bis 5 Mikrosekunden und einer Impulsenergie von 0,05 bis 0,5 Ws. Das aus der Lichtquelle 1 austretende Licht besitzt schwerpunktmäßig eine Wellenlänge von 350....500 nm.

Der Lichtstrahl L wird von dem Wood'schen Horn 3 vollständig geschluckt, so daß Licht allenfalls von in der Meßkammer 8 befindlichen Partikeln, z.B. Staubteilchen, abgelenkt werden und auf den Lichtempfänger 2 gelangen kann.

Der Lichtempfänger 2 besitzt eine Weitwinkeloptik, so daß der gesamte Bereich zwischen dem Austrittsfenster der Lichtquelle 1 und der Eingangsöffnuing des Wood'schen Horns 3 erfaßt wird. Für bestimmte Anwendungen reicht eine relative großflächige Photodiode aus, die ebenfalls eine Weitwinkelcharakteristik aufweist. Im Bereich des Eintrittsfensters des Lichtempfängers 2 befindet sich eine Sammellinse 21, der eine Photodiode 22 nachgeordnet ist. An die Photodiode 22 ist ein Vorverstärker 23 angeschlossen. Diesem folgt ein Analogschalter 24. Der Ana logschalter 24 empfängt ein Tor-Signal von einem Impulsabnehmer 5. Dadurch ist der Lichtempfänger 2 mit der Lichtquelle 1 synchronisiert. Der Analogschalter 24 läßt das von dem Vorverstärker 23 abgegebene Signal nur in dem Moment durch, in dem von der Lichtquelle 1 ein Lichtimpuls abgegeben wird. Hierdurch werden Störeinflüsse weitestgehend ausgeschaltet.

An den Analogschalter 24 schließt sich ein Integrator an, dessen Ausganssignal auf einen Spannungs/Strom-Wandler 26 gegeben wird. Letzterer gibt ein auswertbares Signal an eine hier nicht näher dargestellte Signalauswertungs-Schaltung.

Im Hinblick auf die extrem kurze Impulsdauer des von der Lichtquelle 1 abgegebenen Lichtimpulses ist im Lichtempfänger in Verbindung mit dem Vorverstärker 23 eine Filterschaltung angeordnet, die eine Bandbreite von 50 bis etwa 1000 kHz aufweist. Dadurch ist sichergestellt, daß die wichtigsten Komponenten des dem empfangenen Lichtimpuls entsprechenden elektrischen Signals der Signalauswertung unterzogen werden, während andere Komponenten niedriger Frequenz ausgefiltert werden.

Vor dem Lichtempfänger kann ein Blaufilter angeordnet sein, das mit einer steilen Kante der Filterkennlinie die gelben, roten oder infraroten Spektralanteile des Tageslichts abschneidet. Dadurch empfängt der Lichtempfänger 2 praktisch nur das Licht aus demjenigen Bereich des Spektrums, das von der Lichtquelle 1 erzeugt wird.

Um Verschmutzungen der Optik der Lichtquelle 1 und/oder des Lichtempfängers 2 sowie des Wood'schen Horns 3 zu vermeiden, ist eine Reinluft-Zuströmvorrichtung 30 vorgesehen. Die Zuströmvorrichtung 30 umfaßt ein LuftVorfilter 31, ein dem Vorfilter 31 nachgeschaltetes Gebläse 32, ein Feinfilter 33 sowie Luftleitungen 34 und 35, die zu einer Ringdüse 36 am Eintrittsfenster des Lichtempfängers 2 bzw. zu einer Ringdüse 37 am Austrittsfenster der Lichtquelle 1 führen. Außerdem kann das Feinfilter 33 an das spitze Ende des Wood'schen Horns 3 angeschlossen werden. Durch die Reinluft-Zuströmvorrichtung wird im Bereich der Ringdüsen 36 und 37 sowie im Wood'schen Horn 3 mit stark gereinigter Luft ein Überdruck erzeugt, der durch den Kamin und mithin durch die Meßkammer 8 geführte Partikel davon abhält, sich an den Teilen im Bereich der Ringdüsen bzw. im Wood'schen Horn abzusetzen.

Zur Funktionskontrolle des Geräts kann man justierbare Streulichtstäbe 6 und/oder 7 verwenden. Diese Stäbe 6, 7 werden bis zu einer bestimmten Stelle in die Meßkammer 8 eingefahren, derart, daß sich ihre Stirnflächen an einer exakt vorbestimmten Position befinden. Daraufhin wird die Lichtquelle 1 aktiviert; verändert sich das Signal gegenüber dem Signal, das ohne eingeschobenen Streulichtstab erhalten wird, so wird dadurch die Betriebsbereitschaft qualitativ angezeigt.

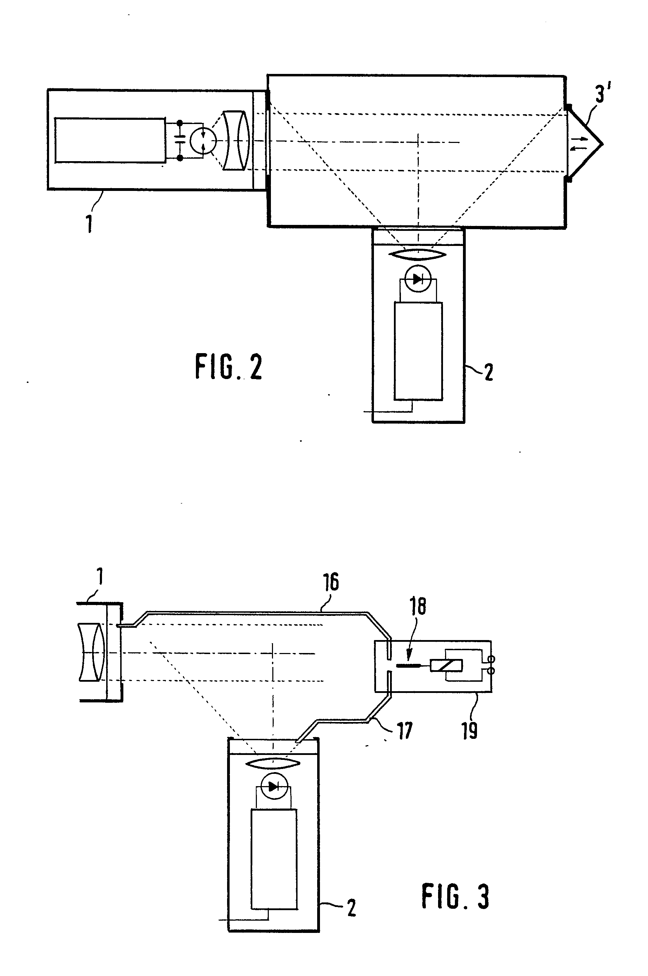

Fig. 2 zeigt eine modifizierte Ausführungsform der Erfindung. Anstelle des Wood'schen Horns 3 ist in Fig. 2 eine Tripel-Spiegel-Anordnung 3 ' vorgesehen, die das parallele Lichtstrahlenbündel vollständig zur Lichtquelle 1 zurückwirft.

Fig. 3 zeigt ein Streulichtmeßgerät mit einer Selbstprüfeinrichtung. Zwischen der Lichtquelle 1 und dem Lichtempfänger 2 befindet sich ein unterbrochener Glasfaserstrang, dargestellt in Form zweier Faserstücke 16 bzw. 17. An der Unterbrechungsstelle zwischen den Strängen 16 und 17 befindet sich ein durch eine elektromechanische Betätigungsanordnung 90 betätigbares Graufilter 18. Das Graufilter 18 läßt sich in den Lichtweg zwischen den Glasfattersträngen 16 und 17 einschieben. Bei eingeschobenem Graufilter und ansonsten abgedecktem Lichtempfänger wird ein vorbestimmter Meßwert eingespielt.

Ein Abweichen des Meßwertes vom Sollwert deutet auf eine nicht mehr leistungsfähige Xenon-Funkenstrecke, eine nicht ordnungsgemäß arbeitende Photodiode oder eine Verschmutzung der Optik der Lichtquelle 1 bzw. des Lichtempfängers 2 hin.

Während der normalen Messung muß die Selbstprüfeinrichtung selbstverständlich außer Betrieb gesetzt werden. Dies erfolgt vorzugsweise durch eine elektromagnetisch in den Glasfaserstrang eingeschobene Verschlußklappe und senderseitige Strahlabdeckung.

Als weitere Sicherheit gegen Störungen kann die Verstärker-und Auswerteschaltung mit einem sogenannten lebenden Nullpunkt betrieben werden, d.h. im Ruhezustand fließt ein Ruhestrom von etwa 4 mA. Ein Ausfall der Stromversorgung wird dadurch unmittelbar angezeigt. Beispielsweise kann in diesem Fall ein entsprechender Alarm ausgelöst werden.

Für besonders hohe Empfindlichkeiten empfiehlt es sich, die Funkenstrecke der Lichtquelle mit einer Xenon-Füllung mit über 1 Bar erhöhtem Fülldruck zu benutzen. Das Elektroden-Material sollte extrem verstäubungsarm sein. Man kann z.B. eine Elektrodenlegierung verwenden, die aus gesintertem Wolfram in Verbindung mit Thorium, Barium, Aluminium und/oder Nickel zusammengesintert ist. Man erreicht dadurch, daß die Elektroden eine Lebensdauer von mehreren Milliarden Lichtimpulsen aufweisen.

Das erfindungsgemäße Streulichtmeßgerät kann überall dort eingesetzt werden, wo es auf die Messung einer sehr kleinen Streulichtmenge bzw. Staubdichte ankommt. Einsatzgebiete sind insbesondere Kamine in der Blei-, Absest-oder Zinkindustrie. Möglich sind ebenfalls Messungen vom Flugzeug aus oder Messungen in Meßtürmen in freier Atmosphäre, bei denen z.B. die Konzentration einer Dunstglocke bei etwa 20 km Sichtweite noch immerhin 20 $\mu$g/m$^3$ Staub enthält, bei etwa 3 km Sichtweite noch etwa 180 $\mu$g/m$^3$ .

## Ansprüche

1. Streulichtmeßgerät für die in situ-Messung in einem gasförmigen Medium zur qualitativen und/oder quantitativen Messung von Trübstoffgehalten, Aerosolen oder Stäuben, mit einer Lichtquelle (1), die Lichtimpulse in einen das Medium führenden Meßraum (8) sendet, einem Lichtempfänger (2), der außerhalb des Strahlengangs der Lichtquelle angeordnet ist und Streulicht aus dem Strahlengang der Lichtquelle empfängt, und einer Verstärker-Auswerteschaltung (23 - 26), zur Verarbeitung der Signale der Verstärker-Auswerteschaltung (23 - 26), **gekennzeichnet** durch die Kombination folgender Merkmale:

a) Die Lichtquelle besitzt eine Xenon-Funkenstrecke (13), die Lichtimpulse einer Dauer von 0,5....5 Mikrosekunden mit einer Impulsenergie von 0,05....0,5 Ws im blau-weißen Spektrum (Helligkeitsspitze 350....500 nm Lichtwellenlänge) erzeugt;

b) Der Lichtempfänger ist mit dem der Lichtquelle (1) zugeordneten Impulsgenerator (11) über eine Torschaltung (5, 24) synchronisiert und besitzt einen Photodetektor (22), dem ein Filter-Verstärker mit einer Bandbreite von etwa 50....1000 kHz nachgeschaltet ist;

c) Ein hochwertiger Anastigmat (14) bündelt das Licht der Lichtquelle (1) in einen parallelen oder schwach konvergenten Strahl;

d) der Lichtempfänger (2) besitzt eine Weitwinkelcharakteristik zum Empfang des von Partikeln im Strahlengang gestreuten Lichts.

2. Gerät nach Anspruch 1, dadurch **gekennzeichnet**, daß der parallele oder - schwach konvergente Strahl nach Durchsetzen des Meßraumes (8) in einer Lichtfalle aufgefangen wird.

3. Gerät nach Anspruch 2, dadurch **gekennzeichnet**, daß der Strahl in ein Wood'sches Horn (3) oder in eine Tripel-Spiegel-Anordnung (3 ') projiziert wird.

4. Gerät nach einem der Ansprüche 1 bis 3, dadurch **gekennzeichnet**, daß der Lichtempfänger mit einer Weitwinkeloptik (21) ausgestattet ist, vorzugsweise mit einem Anastigmaten oder einer Sammellinse.

5. Gerät nach einem oder mehreren der Ansprüche 1 bis 4, dadurch **gekennzeichnet**, daß der Photodetektor eine Photodiode (22) oder eine Hochvakuumphotozelle ist.

6. Gerät nach einem der Ansprüche 1 bis 5, dadurch **gekennzeichnet**, daß vor dem Lichtempfänger ein Blaufilter angeordnet ist, das mit steiler Kante die gelben, roten oder infraroten Spektralanteile des Trageslichts abschneidet.

7. Gerät nach einem der Ansprüche 1 bis 6, dadurch **gekennzeichnet**, daß eine Reinluft-Zuströmanordnung (30) vorgesehen ist, die reine Luft oder reines Gas in den Bereich aller oder einiger optischer Grenzflächen des Geräts bläst.

8. Gerät nach einem der Ansprüche 1 bis 7, dadurch **gekennzeichnet**, daß die Reinluft-Zuströmanordnung (30) an der Lichtquelle (1) und/oder am Lichtempfänger (2) eine Ringdüse (36, 37) aufweist.

9. Gerät nach einem der Ansprüche 1 bis 8, dadurch **gekennzeichnet**, daß zur Feststellung der Betriebsbereitschaft in den Meßraum (8) ein justierbarer Stift einführbar ist.

10. Gerät nach einem der Anspruche 1 bis 9, dadurch **gekennzeichnet**, daß das Wood'sche Horn (3) von der Spitze zur Öffnung hin mit Reinluft laminar durchströmt wird.

11. Gerät nach einem oder mehreren der vorangehenden Ansprüche, dadurch **gekennzeichnet**, daß zur Feststellung von Standardsignalen von der Lichtquelle (1) zum Lichtempfänger (2) ein Glasfaserstrang (16, 17) führt, der durch einen einschiebbaren Graufilter (18) und eine Verschlußklappe unterbrechbar ist.

12. Gerät nach Anspruch 11, dadurch **gekennzeichnet**, daß die Betätigung der Lichtleiter-Verschlußklappe bzw. des Graufilters elektromagnetisch erfolgt.

13. Gerät nach einem oder mehreren der Ansprüche 1 bis 12, dadurch **gekennzeichnet**, daß der Nullwert der Verstärker-Auswerteschaltung (23 - 26) bei einem bestimmten Strompegel liegt, so daß ein Stromausfall erkennbar ist.

14. Gerät nach einem oder mehreren der Ansprüche 1 bis 13, dadurch **gekennzeichnet**, daß die Elektroden der Xenon-Funkenstrecke (13) aus einem Wolfram-Sintermetall mit Zusätzen von Nickel, Barium und/oder Aluminium bestehen.

15. Gerät nach einem der Ansprüche 1 bis 14, dadurch **gekennzeichnet**, daß der Photodetektor (22) und Teile der Verstärker-Auswerteschaltung (23 - 26) in einem isothermischen Gehäuse angeordnet sind, das vorzugsweise auf einer Temperatur von 50°C stabilisiert ist.

FIG.1

Luft

Signalauswertung

0 257 248

FIG. 2

FIG. 3